# EUROPÄISCHE PATENTSCHRIFT

(11) **EP 0 498 024 B1**
(45) Veröffentlichungstag und Bekanntmachung des Hinweises auf die Patenterteilung: **05.03.1997**
(21) Anmeldenummer: 91106997.9
(22) Anmeldetag: 30.04.1991
(51) Int. Cl.: C22B 3/04, C22B 3/02, B01D 11/02

(54) **Verfahren und Vorrichtung zum Herauslösen von Metallen aus Gesteinen und Ablagerungen**
Process and apparatus for extracting metals from rocks and deposits
Procédé et dispositif d'extraction de métaux de pierres et de sédiment

(30) Priorität: 02.02.1991 DE 4103172
(43) Veröffentlichungstag der Anmeldung: 12.08.1992
(73) Patentinhaber: ERWIN MÜLLER GmbH, D-74906 Bad Rappenau (DE)
(72) Erfinder: Müller, Erwin, W-6927 Bad Rappenau-Heinsheim (DE)
(74) Vertreter: Müller, Hans, Dipl.-Ing.

(56) Entgegenhaltungen:
- EP-A- 0 426 143
- DE-C- 607 560
- US-A- 4 887 799
- SOVIET INVENTIONS ILLUSTRATED Section Ch, Week 8443, 5. Dezember 1984 Derwent Publications Ltd., London, GB; Class M, AN 84-268813

## Beschreibung

Die Erfindung betrifft ein Verfahren zum Herauslösen von Metallen aus Gesteinen, Schlämmen, Flüssigkeitsablagerungen, Aschen oder dergleichen Materialien. Die Erfindung betrifft auch eine bei diesem Verfahren verwendete Vorrichtung.

Ein derartiges Verfahren ist in der SU-A-1 077 940 beschrieben.

Ein derartiges Verfahren ist weiterhin in der EP-A-0 426 143 (veröffentlichungstag 08.05.91, Priorität 01.11.89 und 01.03.90) beschrieben. Bei diesem Verfahren wird das das Metall enthaltende Gemenge in etwa mehlige Konsistenz gebracht, dieses mehlige Gemenge mit Wasser und gegebenenfalls einem Gleitmittel vermischt, diese Mischung unter Druck gegen einen unter Hochdruck austretenden Strahl des Wasser und Lösungsmittel enthaltenden Flüssigkeitsgemisches derart gerichtet, daß die Mischung vollständig mit diesem Gemischstrahl benetzt. Anschließend werden der Strahl und die Mischung innig miteinander verwirbelt.

Ausgehend von diesem Stand der Technik wird mit der vorliegenden Anmeldung bezweckt, eine weitere, wirtschaftlich interessante Möglichkeit für das eingangs genannte Verfahren und eine diesbezügliche Vorrichtung anzugeben.

Diese Erfindung ist bei dem erfindungsgemäßen Verfahren durch die Merkmale des Patentanspruchs 1 gegeben. Die bei diesem Verfahren verwendete erfindungsgemäße Vorrichtung ist durch die Merkmale des Patentanspruchs 6 gegeben.

Das erfindungsgemäße Verfahren zeichnet sich bei dem aus der älteren Patentanmeldung vorgegebenen Stand der Technik dadurch aus, daß der Mischungsstrahl, der das mehlige Gemenge mit dem Metall sowie das Lösungsmittel enthält, mit einem gasförmigen Förderstrahl zu einem Gesamtstrahl zusammengebracht wird und daß die einzelnen Bestandteile dieses Gesamtstrahles innig miteinander verwirbelt werden. Bei der dungsgemäßen Vorrichtung zeichnet sich der in die Verwirbelungskammer hineinführende zumindest eine Zuleitungskanal dadurch aus, daß in ihn sowohl das Gemenge mit dem Metall, das Lösungsmittel als auch ein gasförmiges Medium hineingeleitet wird. Das Einleiten der einzelnen Komponenten kann dabei unter Überdruck bzw. Hochdruck oder infolge Unterdruck erfolgen.

Das bei diesem erfindungsgemäßen Verfahren verwendete gasförmige Fördermittel kann Luft, Gas bzw. Gasgemisch oder auch Dampf sein. Diese gasförmige Medien haben den Vorteil, daß durch Wahl eines geeigneten gasförmigen Oxidationsmittels ein gegenüber einem flüssigen Oxidationsmittel gesteigerter Wirkungsgrad hinsichtlich der Oxidation der in dem Gemenge enthaltenden metallischen Bestandteile möglich ist. Dadurch lassen sich die Kosten von entsprechenden Verfahren verringern.

In Abhängigkeit von der Art und der Zusammensetzung des mehligen Gemenges, in dem das Metall vorhanden ist, und darüber hinaus in Abhängigkeit von der Art und dem Anteil des verwendeten Lösungsmittels kann das Zuführen dieses mehr oder weniger breiigen Gemenges auch unter Überdruck in den Zuleitungskanal hinein erfolgen. Auch das in manchen Fällen erforderlich werdende Einleiten von zusätzlichem Lösungsmittel in den Zuleitungskanal hinein kann unter Überdruck erfolgen. Bei geeigneter Wahl der Geometrie der einzelnen Einleitungsbereiche kann das jeweilige Zuführen auch durch das Entstehen eines Unterdruckes infolge der hohen Material-Geschwindigkeiten in den anderen Einleitungskanälen bewirkt werden.

Die Anzahl der einzelnen Einleitungskanäle für das Gemenge und für das gasförmige Trägermedium kann entweder so sein, daß einem zentralen Mischungsstrahl mit dem mehligen Gemenge mehrere Förderstrahlen mit dem gasförmigen Medium zugegeben werden. Umgekehrt kann auch einem zentralen Förderstrahl mit dem gasförmigen Medium mehrere beispielsweise sternförmige Mischungsstrahlen mit mehligem Gemenge zugegeben werden.

Sofern ein zentraler Einleitungskanal für das gasförmige Medium vorhanden ist, hat es sich als vorteilhaft herausgestellt, gegebenenfalls zusätzliches Lösungsmittel in diesen gasführenden Kanal in Förderrichtung - zwecks optimaler Vermischung dieses zusätzlichen Lösungsmittels mit dem breiigen Gemenge - vor dem Zuführen des breiigen Gemenges einzuleiten. Im umgekehrten Fall, wenn ein zentraler Einleitungskanal für das breiige Gemenge vorhanden ist, ist es sinnvoll, zusätzliches Lösungsmittel - sofern erforderlich - nach dem Einleiten des gasförmigen Mediums in diesen einen zentralen Einleitungskanal hinein einzuleiten.

Weitere vorteilhafte Ausgestaltungen und Weiterbildungen der Erfindung sind den Merkmalen der weiteren Unteransprüche sowie den nachstehenden Ausführungsbeispielen zu entnehmen.

Die Erfindung wird im folgenden anhand der in der Zeichnung dargestellten beiden Ausführungsbeispiele näher beschrieben und erläutert. Es zeigen:
- Fig. 1: einen schematischen Grundriß einer ersten Vorrichtung zur Anwendung des erfindungsgemäßen Verfahrens und
- Fig. 2: einen schematischen Grundriß einer zweiten Vorrichtung zur Anwendung des erfindungsgemäßen Verfahrens.

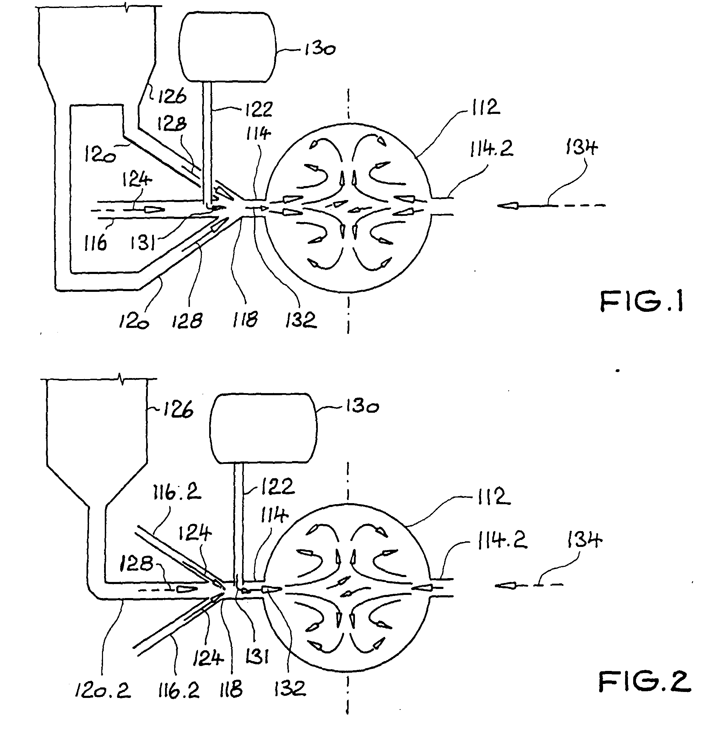

Eine Verwirbelungskammer 112 ist in einem nicht näher dargestellten Gehäuseblock vorhanden. In den Ausführungsbeispielen gemäß Fig. 1 und Fig. 2 schließt an die Verwirbelungskammer 112 jeweils ein nicht dargestelltes Absetz- bzw. Auffangbecken an. Dieses Absetz- bzw. Auffangbecken weist ein Sieb auf, das zum Zurückhalten von aus der Verwirbelungskammer 112 austretenden Schlamm- oder sonstigen gröberen Bestandteilen dient, so daß durch den Sieb nur flüssige Bestandteile mit gelöst vorhandenen Metallpartikeln nach unten hindurchdringen können. Eine derartige Verwirbelungskammer 112 mit Absetz- bzw. Auffangbecken ist beispielsweise in der EP-A-0 426 143 näher beschrieben.

In diese Verwirbelungskammer 112 führt ein Zuleitungskanal 114 hinein. Dieser Zuleitungskanal 114 findet seinen rückwärtigen Anschluß in einem zentralen Kanal 116. An der Stelle 118, zwischen dem Kanal 116 und dem Zuleitungskanal 114, münden - im vorliegenden Beispielsfall - sternförmig mehrere weitere Kanäle 120 schräg in den Zuleitungskanal 114 hinein, von denen zwei Kanäle dargestellt sind. Vor der Stelle 118, d. h. noch in den zentralen Kanal 116 hinein, mündet ein weiterer Kanal 122 ein.

Durch den zentralen Kanal 116 wird ein gasförmiges Medium 124 in Richtung des dargestellten Pfeils hindurchgedrückt. Dieses gasförmige Medium 124 kann ein Luft- oder sonstiges Gasgemisch sein und dabei in der Gasphase oder auch als Dampf vorliegen. Durch die anderen Kanäle 120 fließt aus einem Behälter 126 Material in den Zuleitungskanal 114. Dieses Material besteht aus mehligem, das Metall enthaltende Gemenge in Verbindung mit Lösungsmittel. Dieses Material besitzt daher eine breiige Konsistenz. Diese breiige Mischung 128 strömt durch die Kanäle 120 in den Zuleitungskanal 114 und von dort zusammen mit dem gasförmigen Medium 124 in die Verwirbelungskammer 112 hinein, so wie dies mit dem linken Zuleitungskanal 114 schematisch dargestellt ist.

In einem Behälter 130 ist zusätzliches Lösungsmittel 131 vorhanden, das durch den Kanal 122 in den zentralen Kanal 116 noch zusätzlich eingegeben werden kann. In dem gasförmigen Medium 124, das in dem zentralen Kanal 116 vorhanden ist, verteilt sich das zusätzliche Lösungsmittel 131 sehr gut, so daß dieses zusätzliche Lösungsmittel 131 anschließend einen innigen und gleichmäßigen Kontakt mit der breiigen Mischung 128 im Zuleitungskanal 114 bekommt. Im Bereich des Zuleitungskanals 114 kann daher eine weitere und beschleunigte Oxidation hinsichtlich des in dem Gemenge enthaltenden Metalls erfolgen.

Eine weitere Verwirbelung der in dem Zuleitungskanal 114 vorhandenen Material-Bestandteile 132 erfolgt in der Verwirbelungskammer 112. Zu diesem Zweck werden die Bestandteile 132 so in die Verwirbelungskammer 112 hineingeleitet, daß sie mit einem weiteren Material-Strahl 134 zusammentreffen. Dieses Zusammentreffen kann ein Aufeinanderprallen, wie in Fig. 1 dargestellt, sein. Der andere in die Verwirbelungskammer 112 hineinführende Strahl 134 kann in seiner Zusammensetzung dem Material-Strahl 132 entsprechen. Es ist allerdings auch möglich, die Zusammensetzung dieses Strahls 134 abzuändern. So könnte dieser Strahl auch beispielsweise nur aus einem flüssigen Medium sich zusammensetzen. Andererseits könnte dieser Strahl 134 auch nur aus der breiigen Mischung 128 zusammengesetzt sein. Darüberhinaus könnte der Strahl 134 auch aus bereits von Metallen mehr oder weniger befreiten Schlämmen oder dergleichen bestehen.

Die Vorrichtung in Fig. 2 unterscheidet sich von der Vorrichtung gemäß Fig. 1 darin, daß die Kanäle mit den Gemengestrahlen 128 als zentraler Kanal 120.2 vorhanden sind und daß die sternförmig, schräg in den Zuleitungskanal 114 einmündenden weiteren Kanäle 116.2 das gasförmige Medium 124 enthalten. Bei dieser Anordnung ist ferner die Einmündungsstelle für den Kanal 122 im Bereich des Zuleitungskanals 114 vorhanden, d.h. zwischen der Stelle 118 und der Verwirbelungskammer 112.

Je nach den herrschenden Druckverhältnissen kann das zusätzliche Lösungsmittel 131 aus dem Behälter 130 unter zusätzlichem Druck eingeleitet werden. Das Einleiten kann auch durch an der Einleitungsstelle infolge der hohen Geschwindigkeiten der in dem zentralen Kanal 116 bzw. 120.2 entstehenden Unterdruck bewirkt werden. Für das Einleiten der aus dem Behälter 126 zugeführten Bestandteile mit dem mehligen Gemenge und dem Lösungsmittel gilt entsprechendes. Auch diese Bestandteile können unter Druck oder bei entsprechenden Druckverhältnissen infolge auftretendem Unterdruck in den Zuleitungskanal 114 eingegeben werden.

Statt der Anordnung eines zweiten Zuleitungskanals 114.2 könnte das Material aus dem Zuleitungskanal 114 auch gegen die Innenwand der Verwirbelungskammer 112 aufprallen und sich dadurch verwirbeln. Gegebenenfalls könnte an der Aufprallseite innerhalb der Verwirbelungskammer 112 eine zusätzliche Schutzschicht bzw. Verschleißschicht angebracht werden. Diese Verschleißschicht könnte auch aus dem jeweiligen mehligen Gemenge bestehen, so daß eine konstruktive Materialabnutzung durch das Aufprallen des Gesamtstrahls 132 in der Verwirbelungskammer 112 nicht auftreten könnte.

## Patentansprüche

1. Verfahren zum Herauslösen von Metallen aus Gesteinen, Schlämmen, Flüssigkeitsablagerungen oder Aschen, bei dem
- das Metall enthaltende Gemenge in mehlige Konsistenz gebracht wird,
- dieses mehlige Gemenge mit einem Lösungsmittel, gegebenenfalls Wasser und/oder einem Gleitmittel, zu einem Mischungsstrahl (128) vermischt wird,
- dieser Mischungsstrahl unter Druck mit einem gasförmigen Förderstrahl (124) zu einem Gesamtstrahl (132) zusammengebracht wird,
**dadurch gekennzeichnet**, daß
- der Gesamtstrahl anschließend in eine Verwirbelungskammer (112) eingeleitet wird,
- der Gesamtstrahl in der Verwirbelungskammer zuerst auf die Bestandteile eines weiteren Strahls (134) trifft, bevor sich seine Bestandteile in der Verwirbelungskammer innig miteinandern verwirbeln,
- als gasförmiger Förderstrahl ein solcher verwendet wird, der ein gasförmiges Oxidationsmittel für die im Gemenge enthaltenden metallischen Bestandteile enthält.

2. Verfahren nach Anspruch 1,
**dadurch gekennzeichnet**, daß dem Mischungsstrahl (128) mehrere Förderstrahlen (124) oder Förderstrahl (124) mehrere Mischungsstrahlen (128) zugegeben werden.

3. Verfahren nach Anspruch 2,
**dadurch gekennzeichnet**, daß der Mischungsstrahl (128) unter Überdruck gesetzt wird.

4. Verfahren nach einem der Ansprüche 1 bis 3,
**dadurch gekennzeichnet**, daß dem Förderstrahl (124) und/oder dem Gesamtstrahl (132) noch Lösungsmittel (131) zugegeben wird.

5. Verfahren nach Anspruch 4,
**dadurch gekennzeichnet**, daß das Lösungsmittel (131) unter Überdruck gesetzt wird.

6. Vorrichtung zum Durchführen des Verfahrens nach Anspruch 1,
- mit einem Gehäuse mit einer Verwirbelungskammer (112),
- mit einer Ausflußöffnung in dieser Kammer (112),
- mit zwei in diese Kammer (112) einmündenden Kanälen (114, 114.2), die sich mit ihrer Mündung diametral gegenüberliegen und von denen zumindest ein Kanal ein den Gesamtstrahl (132) in die Kammer (112) einleitender Zuleitungskanal (114) ist, so daß aus dem zumindest einen Zuleitungskanal (114) der Gesamtstrahl auf den anderen Strahl aus demanderen in die Kammer (112) einmündenden Kanal (114.2) aufprallbar herausführbar ist,
- wobei dem Zuleitungskanal (114) eine Hochdruckpumpe zugeordnet ist, mit welcher der Gesamtstrahl unter Hochdruck durch den Zuleitungskanal (114) hindurchdrückbar und in die Verwirbelungskammer (112) einleitbar ist,
- mit einem zentralen Kanal (116 bzw. 120.2), der an einer Stelle (118) in den Zuleitungskanal (114) einmündet,
- mit weiteren Kanälen (120 bzw. 116.2), die an dieser Stelle (118) seitlich in den Zuleitungskanal (114) einmünden,
**dadurch gekennzeichnet**, daß
- die weiteren Kanäle (120 bzw. 116.2) sternförmig schräg in den Zuleitungskanal (114) einmünden,
- entweder der zentrale Kanal (116) oder die sternförmig schräg angeordneten weiteren Kanäle (116.2) Gaskanäle sind, durch die der gasförmige Förderstrahl unter Druck hindurchleitbar ist, so daß
- entweder durch den zentralen Kanal der das flüssige mehlige Gemenge als breiige Mischung (128) enthaltende Mischungsstrahl und durch die sternförmig angeordneten Kanäle der gasförmige Förderstrahl, oder durch den zentralen Kanal der gasförmige Förderstrahl und durch die sternförmig angeordneten weiteren Kanäle der Mischungsstrahl so durchleitbar sind, daß die Strahlen gemeinsam als Gesamtstrahl (132) unter Druck in die Kammer (112) einleitbar sind.

7. Vorrichtung nach Anspruch 6, **dadurch gekennzeichnet**, daß die Kanalmündung des zumindest einen Zuleitungskanals (114) düsenartig ausgebildet ist.

8. Vorrichtung nach Anspruch 6,
**dadurch gekennzeichnet**, daß der bzw. die Zuleitungskanäle (114) im bzw. vor ihrem Mündungsbereich einen Krümmung aufweisen.

9. Vorrichtung nach Anspruch 6-8,
**dadurch gekennzeichnet**, daß zumindest ein weiterer Kanalteil (122) derart besteht, daß aus diesem kanalteil zusätzliches Lösungsmittel (131) austreten kann.

## Claims

1. Process for extracting metals from rocks, muds, liquid deposits or ashes, in which
- the bulk material containing metal is brought to a floury consistency,
- this floury bulk material is mixed with a solvent, optionally water and/or a lubricant, to form a mixture jet (128),
- this mixture jet is combined, under pressure, with a gaseous conveying jet (124) to form a complete jet (132),
characterized in that
- the complete jet is then introduced into a turbulence chamber (112),
- the complete jet in the turbulence chamber firstly strikes the constituents of a further jet (134), before its constituents become intimately swirled together in the turbulence chamber,
- the gaseous conveying jet used is one which contains a gaseous oxidizing agent for the metallic constituents contained in the bulk material.

2. Process according to Claim 1, characterized in that a plurality of conveying jets (124) are added to the mixture jet (128), or a plurality of mixture jets (128) are added to the conveying jet (124).

3. Process according to Claim 2, characterized in that the mixture jet (128) is placed under superatmospheric pressure.

4. Process according to one of Claims 1 to 3, characterized in that solvent (131) is also added to the conveying jet (124) and/or the complete jet (132).

5. Process according to Claim 4, characterized in that the solvent (131) is placed under superatmospheric pressure.

6. Apparatus for carrying out the process according to Claim 1,
- having a housing with a turbulence chamber (112),
- having a discharge opening in this chamber (112),
- having two ducts (114, 114.2) which open into this chamber (112) and whose orifices are situated diametrically opposite, at least one of which ducts is a supply duct (114) introducing the complete jet (132) into the chamber (112), so that the complete jet can be guided out of the at least one supply duct (114) such that it can collide with the other jet from the duct (114.2) from the other duct emerging into the chamber (112),
- a high-pressure pump being assigned to the supply duct (114), by means of which pump the complete jet can be forced through the supply duct (114) under high pressure and can be introduced into the turbulence chamber (112),
- having a central duct (116 or 120.2), which at a location (118) opens into the supply duct (114),
- having further ducts (120 or 116.2), which at this location (118) open laterally into the supply duct (114),
characterized in that
- the further ducts (120 or 116.2) open radially obliquely into the supply duct (114),
- either the central duct (116) or the further ducts (116.2) arranged radially obliquely are gas ducts through which the gaseous conveying jet can be conducted under pressure, so that
- either the mixture jet containing the liquid, floury bulk material as a pulpy mixture (128) can be conducted through the central duct and the gaseous conveying jet can be conducted through the radially arranged ducts, or the gaseous conveying jet can be conducted through the central duct and the mixture jet can be conducted through the further ducts arranged radially, so that the jets can be introduced into the chamber (112) under pressure, together, as a complete jet (132).

7. Apparatus according to Claim 6, characterized in that the duct orifice of the at least one supply duct (114) is of nozzle-like design.

8. Apparatus according to Claim 6, characterized in that the supply duct(s) (114) have a curvature in or in front of their orifice region.

9. Apparatus according to Claims 6-8, characterized in that at least one further duct part (122) is present such that additional solvent (131) can emerge from this duct part.

## Revendications

1. Procédé d'extraction de métaux de pierres, boues, sédiments ou cendres, selon lequel
- le mélange contenant du métal est amené sous une consistance farineuse,
- ce mélange farineux est mélangé à un solvant, éventuellement de l'eau, et/ou à un lubrifiant, pour former un jet de mélange (128),
- ce jet de mélange est réuni sous pression à un jet de transport gazeux (124) pour former un jet global (132),
**caractérisé** en ce que
- le jet global est ensuite introduit dans une chambre de tourbillonnement (112),
- le jet global rencontre d'abord dans la chambre de tourbillonnement les composants d'un autre jet (134), avant que ses composants se mettent intimement en tourbillon les uns avec les autres dans la chambre de tourbillonnement,
- on utilise comme jet de transport gazeux un jet qui contient un agent d'oxydation gazeux pour les composants métalliques contenus dans le mélange.

2. Procédé selon la revendication 1, **caractérisé** en ce qu'on ajoute plusieurs jets de transport (124) au jet de mélange (128), ou plusieurs jets de mélange (128) au jet de transport (124).

3. Procédé selon la revendication 2, **caractérisé** en ce que le jet de mélange (128) est mis en surpression.

4. Procédé selon l'une des revendications 1 à 3, **caractérisé** en ce qu'on ajoute encore du solvant (131) au jet de transport (124) et/ou au jet global (132).

5. Procédé selon la revendication 4, **caractérisé** en ce que le solvant (131) est mis en surpression.

6. Dispositif pour la mise en oeuvre du procédé selon la revendication 1,
- avec un carter présentant une chambre de tourbillonnement (112),
- avec une ouverture d'évacuation dans cette chambre (112),
- avec deux canaux (114, 114.2) débouchant dans cette chambre (112), canaux dont les embouchures sont diamétralement opposées et dont au moins un canal est un canal d'alimentation (114) introduisant le jet global (132) dans la chambre (112), de sorte que le jet global sortant de ce ou ces canaux d'alimentation (114) peut être dirigé avec possibilité d'impact sur l'autre jet sortant de l'autre canal (114.2) débouchant dans la chambre (112),
- une pompe à haute pression étant associée au canal d'alimentation (114), par laquelle le jet global peut être refoulé sous haute pression à travers le canal d'alimentation (114) et ainsi introduit dans la chambre de tourbillonnement (112),
- avec un canal central (116 ou 120.2), qui débouche en un point (118) dans le canal d'alimentation (114),
- avec des canaux supplémentaires (120 ou 116.2), qui débouchent latéralement en ce point (118) dans le canal d'alimentation (114),
**caractérisé** en ce que
- les canaux supplémentaires (120 ou 116.2) débouchent en biais en étoile dans le canal d'alimentation (114),
- soit le canal central (116), soit les canaux supplémentaires (116.2) disposés en biais en étoile sont des conduits de gaz, à travers lesquels le jet de transport gazeux peut être dirigé sous pression, de sorte que
- on peut diriger, soit le jet de mélange contenant le mélange farineux liquide sous forme de mélange pâteux (128) à travers le canal central et le jet de transport gazeux à travers les canaux disposés en étoile, soit le jet de transport gazeux à travers le canal central et le jet de mélange à travers les canaux supplémentaires disposés en étoile, de telle sorte que les jets peuvent être conjointement introduits sous pression dans la chambre (112) sous forme de jet global (132).

7. Dispositif selon la revendication 6, **caractérisé** en ce que l'embouchure du ou des canaux d'alimentation (114) est configurée à la manière d'une buse.

8. Dispositif selon la revendication 6, **caractérisé** en ce que le ou les canaux d'alimentation (114) présentent une courbure dans ou avant leur région d'embouchure.

9. Dispositif selon l'une des revendications 6 à 8, **caractérisé** en ce qu'au moins une partie de canal supplémentaire (122) est constituée de telle sorte que du solvant supplémentaire (131) peut sortir par cette partie de canal.
